Europäisches Patentamt

European Patent Office

Office européen des brevets

(11) Publication number: **0 085 517**
**B1**

(12)

# EUROPEAN PATENT SPECIFICATION

(45) Date of publication of patent specification: **04.01.89**

(51) Int. Cl.⁴: **G 11 B 5/09, G 11 B 15/14**

(21) Application number: **83300318.9**

(22) Date of filing: **21.01.83**

(54) Apparatus for recording digital signals.

(30) Priority: **23.01.82 JP 9780/82**

(43) Date of publication of application:
**10.08.83 Bulletin 83/32**

(45) Publication of the grant of the patent:
**04.01.89 Bulletin 89/01**

(84) Designated Contracting States:
**AT CH DE FR GB IT LI NL**

(56) References cited:
**EP-A-0 010 506**
**US-A-4 215 335**
**US-A-4 224 642**
**US-A-4 303 950**

(73) Proprietor: **SONY CORPORATION**
**7-35 Kitashinagawa 6-Chome Shinagawa-ku**
**Tokyo 141 (JP)**

(72) Inventor: **Odaka, Kentaro Patent Division**
**Sony Corporation 7-35 Kitashinagawa 6-chome**
**Shinagawa-ku Tokyo (JP)**

(74) Representative: **Cotter, Ivan John et al**
**D. YOUNG & CO. 10 Staple Inn**
**London WC1V 7RD (GB)**

# EP 0 085 517 B1

**Description**

This invention relates to apparatus for recording digital signals.

Various forms of apparatus are known for recording and reproducing audio signals, such as pulse code modulated (PCM) audio processors for recording PCM audio signals that are converted into video signals by using a video tape recorder (VTR), or a digital audio disc (DAD) which can be used only for reproduction. Also known is fixed head type apparatus for business use for recording and reproducing a PCM magnetic tape. However, a compact, small and lightweight apparatus which enables recording and reproduction has not been available and there is a great need for a small, compact lightweight apparatus for home and portable use as the number of items of PCM audio/video equipment increases.

Particularly since it is necessary to miniaturise the magnetic tape medium for use in a small VTR with a built in video camera, the tape running speed must be slow to obtain a long recording time. Consequently, the use of a conventional analog recording system generally causes deterioration of sound quality and, when editing by using a dubbing operation, causes deterioration of the sound quality as a function of the number of dubbing operations. For this reason, a method is known wherein the audio signals only are recorded in a PCM signal format. However, where the PCM audio signal is recorded together with a colour video signal, the PCM audio signal is normally recorded at the end of the recording track in a VTR of the rotary head type and the recording area is located near the change over interval of the head, which causes many problems such as drop out error in the data and so forth.

The above problems arise also in the case of recording a PCM audio signal only with a rotary head.

According to a first aspect of the invention there is provided apparatus for recording a digital signal on a medium, the apparatus comprising:

data processing circuit means operative to compress the time base of a digital signal which is to be recorded so that the compressed digital signal comprises data intervals that contain the data in the digital signal and that are spaced apart in time by buffer intervals; and

recording circuit means operative to record the compressed digital signal on the medium whereby the recorded signal comprises the data intervals spaced apart by the buffer intervals said apparatus in characterised in that the data processing circuit means is operative to produce redundant data which can be used for error detection or error correction of the recorded digital signal and the recording circuit means is operative to record the redundant data on the medium in said buffer intervals before and/or after the data intervals.

According to a second aspect of the invention there is provided apparatus for recording a digital signal on a magnetic medium, the apparatus comprising:

an analog-to-digital converter for converting an analog audio signal to a digitised audio signal;

an encoder operative to encode synchronisation, address and redundant data including error detection and error correction codes with the digitised audio signal to produce a digital audio signal to be recorded;

data processing circuit means operative to compress the time base of the digital audio signal to be recorded so that the compressed digital audio signal comprises audio data intervals that contain the data in the digital audio signal and that are spaced apart in time; and

recording circuit means operative to record the compressed digital audio signal on tracks of the magnetic medium, the recording circuit means comprising a plurality of magnetic heads, switcher means connected between the plurality of magnetic heads and the data processing circuit means and RF switching means operative to divide a video signal received thereby into a plurality of video signal parts and to supply the video signal parts to the switcher means so that outputs of the switcher means supplied to the magnetic heads comprise video data intervals corresponding to said video signal parts, said audio data intervals and said buffer intervals interposed between said data intervals;

the data processing circuit means being operative to produce other redundant data which can be used for error detection or error correction of the recorded digital audio signal and the recording circuit means being operative to record said other redundant data on the tracks of the magnetic medium in said buffer intervals before and after said audio data intervals.

A preferred embodiment of the invention described hereinbelow can at least alleviate the above-mentioned problems associated with the prior art in that it can increase the ability to correct errors in the data by recording redundant data, for error detection or correction, in the buffer intervals. The preferred apparatus in fact has a greater or the same error correction ability for data at the end of the recording medium, which is a tape, as for data recorded in a central section of the tape. The preferred apparatus can be used in a phase locked loop (PLL) circuit as well as for recording redundant data, which can be used for error detection and correction, in the buffer intervals.

The invention will now be further described, by way of illustrative example, with reference to the accompanying drawings, in which:

Figure 1 is a schematic plan view of a dual head arrangement for a VTR;

Figure 2 is a plan view illustrating tracks on magnetic tape used in the VTR;

Figure 3 is a block diagram of apparatus embodying the invention;

Figure 4 illustrates one block of data to be recorded;

Figure 5 illustrates in block form an error correction code that can be used in apparatus embodying the invention;

2

Figure 6 is a time chart illustrating an example of recording and reproducing digital signals in accordance with the invention; and

Figure 7 is a schematic diagram for use in describing a data frame used in apparatus embodying the present invention.

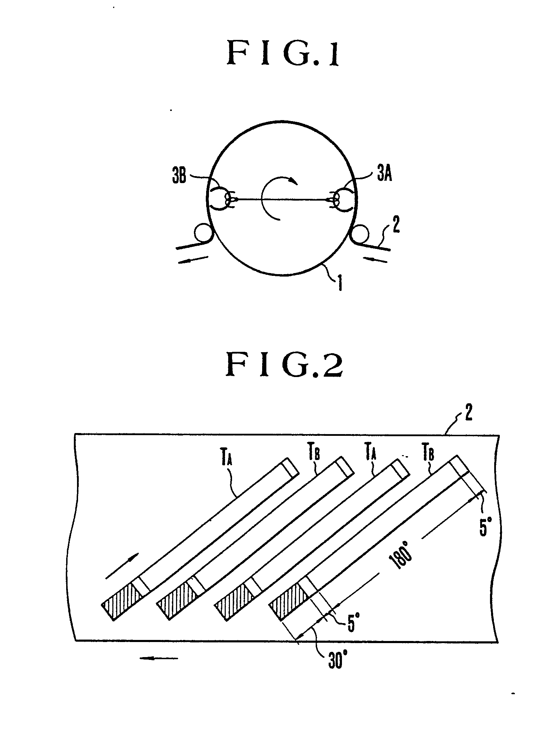

Figure 1 illustrates a VTR head arrangement where both a video signal and an audio pulse code modulate (PCM) signal are recorded on a magnetic tape 2 and reproduced in the same manner as in a two head rotary type video tape recorder (VTR). As shown in Figure 1, the magnetic tape 2 passes around the circumferential surface of a rotary drum with a tapewrap angle of approximately 220° and a pair of rotary heads 3A and 3B are mounted on a rotating arm and rotated as shown by an arrow so as alternately to contact the magnetic tape with an overlap interval corresponding to a tapewrap angle of 40°. The heads 3A and 3B are spaced 180° apart, as shown.

As illustrated in Figure 2, tracks $T_A$ are formed on the magnetic tape 2 by the rotary head 3A and tracks $T_B$ are formed on the tape by the rotary head 3B. An audio PCM signal of one field, which has been time base compressed, is recorded in a range of 30° at the starting end of each of the tracks $T_A$, $T_B$, as indicated in Figure 2 by cross-hatching, in the overlap interval corresponding to the tapewrap angle of 40° along the tracks $T_A$ and $T_B$. No data is recorded in areas of 5° before and after the recording area of the audio PCM signal in order to allow for variations of the head changeover points before and after recording. Video signals are recorded on the remaining portion (180°) of the extent of each track $T_A$, $T_B$ on the magnetic tape 2.

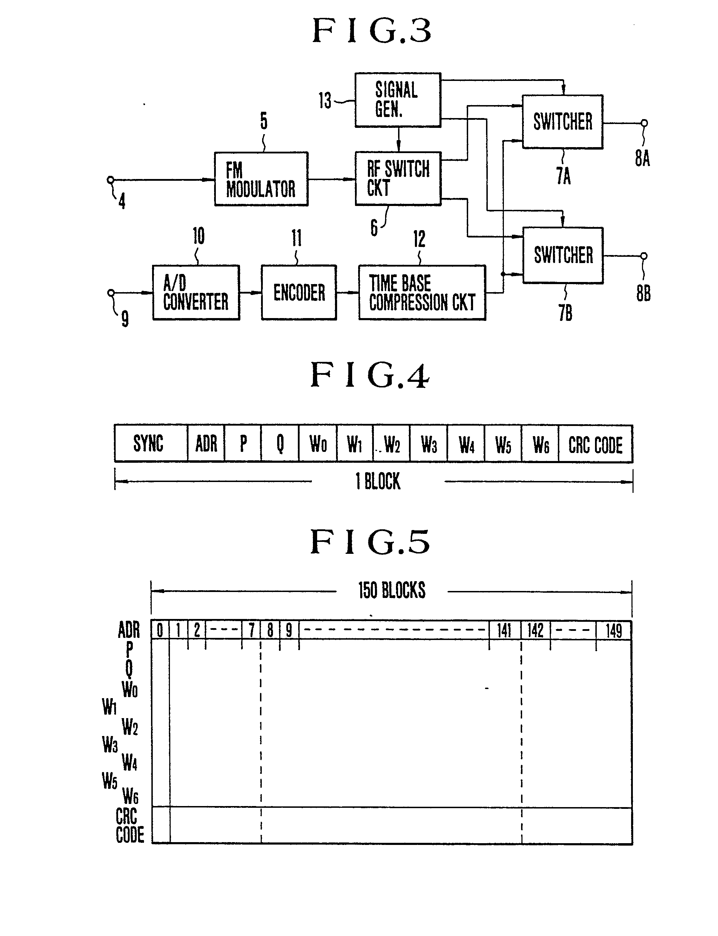

Figure 3 is a block diagram of a circuit which can be used for a recording operation as described with reference to Figure 1. A video signal is supplied to an input terminal 4, frequency modulated by an FM modulator 5, and then divided into two signal routes by a radio frequency (RF) switch circuit 6. A switching signal for switching the RF switch circuit 6 is formed by a signal generator 13 which magnetically detects the rotary phase or angular position of the rotary head, for example by means of rotating magnets mounted on a shaft which turns the arm upon which the heads 3A and 3B are mounted and a magnetic detector that detects the position of the magnets on the shaft. An output of the RF switch circuit 6 is supplied to switchers 7A and 7B where it is synthesized with audio PCM signals and then supplied to output terminals 8A and 8B from which it is then supplied to the rotary heads 3A and 3B for recording on the magnetic tape 2. The signal is supplied through a recording amplifier and a rotary transformer which are not shown since such components are well known to those skilled in the art.

The switches 7A and 7B are controlled by the detected signal from the signal generator 13 or by a timing signal formed from an output of a counter (not shown) for counting clock pulses.

An audio signal which is to be recorded is supplied to an input terminal 9, converted into digital information by an analog-to-digital (A/D) converter 10, and then supplied to an encoder 11 which processes the digitised audio signal, such as by the addition of a redundant code of an error correction code and an error detection code. An output of the encoder 11 is supplied to a time base compression circuit 12, and audio signals in one field interval are recorded in the recording area corresponding to the tapewrap angle of 30° as described above with reference to Figure 2 and as illustrated therein. The time base compression circuit 12 forms audio PCM data which has been time base compressed by means of a random access memory (RAM), using readout clock pulses which have a frequency which is higher than that of write clock pulses. Such audio PCM data which has been time base compressed is synthesised with the FM modulated video signals in the switches 7A and 7B and supplied to the recording heads 3A and 3B.

Figure 4 illustrates one block of audio PCM data which is to be recorded. The first position is occupied by a block sync signal SYNC, which is followed by an address signal ADR. Following this two parity codes P and Q are utilised for error correction and then a seven word block of PCM data $W_0$ and $W_6$ is formed. In this embodiment, 150 blocks of data are formed from the audio PCM signal for one field of the video signal.

As illustrated in Figure 5, an error correction code is formed which comprises a unit of 150 blocks of data having the addresses 0 to 149. Each of the data blocks has the form illustrated in Figure 4. The two parity codes P(n) and Q(n+16) are produced by modulo 2 (MOD.2) processing of the following expressions.

$$P(n)=Q(n+16)+W_0(n+32)+W_1(n+48)+W_2(n+64)+W_3(n+80)+W_4(n+96)+W_5(n+112)+W_6(n+128)$$

$$Q(n+16)=P(n+1)+W_0(n+30)+W_1(n+36)+W_2(n+33)+W_3(n+45)+W_4(n+54)+W_5(n+61)+W_6(n+72)$$

As the above expressions illustrate, the two parity codes are produced from the other parity code and each word of the PCM data which have been respectively interleaved. The block numbers added in each word of the above expressions comply with (MOD 150). Thus, the interleaving is accomplished in 150 blocks. An error detecting code CRC is used for error detection for the address code ADR and the data P, Q, and $W_0$ to $W_6$. The production polynomial can be, for example, $(X^{16}+X^{12}+X^5+1)$.

The signal which is reproduced from the magnetic tape 2 is separated into an FM modulated video signal and an audio PCM signal. The audio PCM signal is processed using time base expansion, error detection and error correction and is converted to an analog audio signal using a digital-to-audio converter. As is illustrated in Figure 5, for error correction a 150-block unit of data is written into block addresses of a memory area of a random access memory (RAM). Data in the block which is determined to have no errors, as detected by the error detecting code CRC, is utilised and written in.

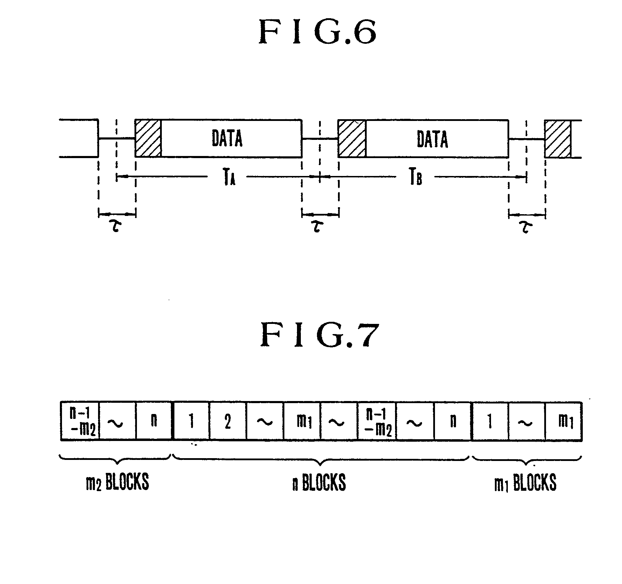

As described above, data blank intervals or buffer intervals, that correspond to areas of the recorded tracks on which it is not wished to record non-redundant audio data (or video data) exist due to the changeover of the two rotary heads 3A and 3B. The audio signals output of the time base compression circuit 12 in Figure 3, and the input to a time base expansion circuit used in reproduction, is therefore as shown in Figure 6. For a rotary two head type apparatus, the interval $T_A$ corresponds to the reproduction interval of the rotary head 3A and the interval $T_B$ corresponds to the interval of the reproduction output of the other rotary head 3B. No data exists in the interval $\tau$ of the junction or splice between the intervals $T_A$ and $T_B$. Thus, when the data is discontinuous, reproduction of the clock is also interrupted so that the preamble interval before the data, as indicated by cross-hatching in Figure 6, has the same frequency component as the clock frequency for the first section of the data after the data blank interval. During the preamble interval shown by cross-hatching, a phase locked loop (PLL) circuit is connected.

However, when using a miniaturised cassette tape, it is disadvantageous to use the recordable area merely for lead-in of the PLL circuit because of inefficient usage of the magnetic tape of the cassette. For this reason, the apparatus embodying the present invention permits effective use of the tape by not only recording the clock signal, but also recording data which can be used for error detection or correction of the data. Thus, in apparatus embodying the present invention, the area indicated by shaded lines in Figure 6 can be used not only for the clock signal but also for error detection and error correction of the data.

As shown in Figure 7, a part of the data comprising n blocks is obtained and recorded respectively in the data blank intervals which are positioned before and after the n blocks (Nos. 1 to n) of data. The $m_2$ blocks in the latter end portion of the n blocks having the numbers (n—1—$m_2$) are recorded in the data blank interval which is located before the position of the n blocks. The $m_1$ blocks having the numbers 1 to $m_1$ are recorded in the data blank interval which is located at the end of the n blocks. In this manner, by recording and writing the data twice by taking out a part of the data, it is possible to perform error correction of the data by locating the end of the n blocks by using a collation method. It is possible to record the redundant code of the error correction code with respect to the data at the end portion of the data blank interval instead of recording it twice also.

By controlling the readout of the data from the RAM of the time base compression circuit 12 illustrated in Figure 3, the above-mentioned portions of the data which have been extracted from the audio PCM data are respectively recorded in the start and end portions of the data recording area indicated by cross-hatching in Figure 2.

Eight blocks of data having the block addresses of 142 to 149, from the 150 blocks of data such as shown in Figure 5, are recorded in the head portion of the recording area of the PCM data, the 150 data blocks 0 to 149 are then recorded, and the data in the eight blocks 0 to 7 is then recorded. Since the encoder 11 is provided with a RAM for memorising the 150 blocks of data as shown in Figure 5, it is possible easily to record the parts of the data repeatedly in such a sequence as given above by controlling the read address of the RAM.

It should be understood from the description of the above embodiment that the redundant data which is used for error detection or error correction is recorded in the data blank interval which provides a buffer for the changeover of the rotary heads or a junction or splice between data. Thus, in contrast to a conventional apparatus which has a preamble signal inserted only for producing a bit clock signal, it is possible in the apparatus embodying the invention effectively to use the data recording area for error correction and otherwise. Thus, in the case of rotary head type recording/reproducing apparatus, since the contact status of the rotary heads with the magnetic tape is unstable at the end portion of the track, the probability of erroneous data in that area is high. However, with the apparatus embodying the present invention, it is possible to increase the error correction ability of the data in these end portions so that it is higher than that of the data in the centre portions.

The present invention may be applied where an audio PCM signal only is recorded by means of a rotary head. In this case, the tapewrap angle of the magnetic tape relative to the tape guide signal may be 180° or less. Also, in the fixed head type PCM tape recorder there are cases in which the data blank interval is formed in a splice or junction of the data for the purpose of editing. It is possible to apply the present invention in such cases also.

**Claims**

1. Apparatus for recording a digital signal on a medium (2), the apparatus comprising:

data processing circuit means (12) operative to compress the time base of a digital signal which is to be recorded so that the compressed digital signal comprises data intervals that contain the data in the digital signal and that are spaced apart in time by buffer intervals; and

recording circuit means (3A, 3B, 7A, 7B) operative to record the compressed digital signal on the medium (2) whereby the recorded signal comprises the data intervals spaced apart by the buffer intervals, characterised in that the data processing circuit means (12) is operative to produce redundant data which can be used for error detection or error correction of the recorded digital signal and the recording circuit means (3A, 3B, 7A, 7B) is operative to record the redundant data on the medium (2) in said buffer intervals before and/or after the data intervals.

2. Apparatus according to claim 1, wherein the redundant data is a portion extracted from said data.

4

3. Apparatus according to claim 2, wherein said redundant digital data comprises successive segments each comprising a former part ($m_1$ blocks) and a latter part ($m_2$ blocks), the arrangement being such that each latter part is recorded before a respective data interval and the former part is recorded after the respective data interval.

4. Apparatus according to claim 1, claim 2 or claim 3, wherein the recording circuit means (3A, 3B, 7A, 7B) comprises a rotary head (3A, 3B) for recording the compressed digital signal and the redundant digital data on the medium (2), said buffer intervals being for changeover of the rotary head (3A, 3B).

5. Apparatus according to any one of the preceding claims, which is capable of recording a digital signal which comprises a PCM audio signal.

6. Apparatus according to claim 5, which is capable of recording said PCM audio signal together with a video signal.

7. Apparatus according to claim 6, which is operative to record said PCM audio signal at end portions of recording tracks ($T_A$, $T_B$) on the medium (2).

8. Apparatus for recording a digital signal on a magnetic medium (2), the apparatus comprising:

an analog-to-digital converter (10) for converting an analog audio signal to be digitised audio signal;

an encoder (11) operative to encode synchronisation, address and redundant data including error detection and error correction codes with the digitised audio signal to produce a digital audio signal to be recorded;

data processing circuit means (12) operative to compress the time base of the digital audio signal to be recorded so that the compressed digital audio signal comprises audio data intervals that contain the data in the digital audio signal and that are spaced apart in time; and

recording circuit means (3A, 3B, 6, 7A, 7B) operative to record the compressed digital audio signal on tracks ($T_A$, $T_B$) of the magnetic medium (2), the recording circuit means comprising a plurality of magnetic heads (3A, 3B), switcher means (7A, 7B) connected between the plurality of magnetic heads (3A, 3B) and the data processing circuit means (12), and RF switching means (6) operative to divide a video signal received thereby into a plurality of video signal parts and to supply the video signal parts to the switcher means (7A, 7B) so that outputs of the switcher means (7A, 7B) supplied to the magnetic heads (3A, 3B) comprise video data intervals corresponding to said video signal parts, said audio data intervals and said buffer intervals interposed between said data intervals;

the data processing circuit means (12) being operative to produce other redundant data which can be used for error detection or error correction of the recorded digital audio signal and the recording circuit means (3A, 3B, 6, 7A, 7B) being operative to record said other redundant data on the tracks ($T_A$, $T_B$) of the magnetic medium (2) in said buffer intervals before and after said audio data intervals.

9. Apparatus according to claim 8, wherein the plurality of magnetic heads (3A, 3B) comprises a pair of heads mounted 180 degrees apart relative to each other, the switcher means comprises a pair of switchers (7A, 7B) connected between the pair of heads (3A, 3B) and the data processing circuit means (12), and the RF switching means (6) is operative to divide a video signal received thereby into two video signal parts and to supply the two video signal parts to the pair of switchers (7A, 7B).

## Patentansprüche

1. Anordnung zur Aufzeichnung eines digitalen Signals auf einem Medium (2), mit

einer Datenverarbeitungsschaltung (12), die wirksam ist, um die Zeitbasis eines aufzuzeichnenden digitalen Signals zu komprimieren, so daß das komprimierte digitale Signale aus Datenintervallen besteht, die die Daten in dem digitalen Signal enthalten und die zeitlich durch Pufferintervalle voneinander getrennt sind, und

Aufzeichnungsschaltungsmitteln (3A, 3B, 7A, 7B), die wirksam sind, um das komprimierte digitale Signal auf dem Medium (2) aufzuzeichnen, wodurch das aufgezeichnete Signal die Datenintervalle enthält, die durch die Pufferintervalle voneinander getrennt sind, dadurch gekennzeichnet, daß die Datenverarbeitungsschaltung (12) wirksam ist, um redundante Daten zu erzeugen, die für eine Fehlererfassung oder eine Fehlerkorrektur des aufgezeichneten digitalen Signals benutzt werden können, und die Aufzeichnungsschaltungsmittel (3A, 3B, 7A, 7B) wirksam sind, um die redundanten Daten in den Pufferintervallen vor und/oder hinter den Datenintervallen auf dem Medium (2) aufzuzeichnen.

2. Anordnung nach Anspruch 1, bei der die redundanten Daten ein Anteil sind, der aus den Daten herausgenommen ist.

3. Anordnung nach Anspruch 2, bei der die redundanten digitalen aus Daten aus aufeinanderfolgenden Segmenten bestehen, wovon jedes einen vorhergehenden Teil ($m_1$-Blöcke) und einen nachfolgenden Teil ($m_2$-Blöcke) enthält, wobei die Anordnung derart ist, das jeder nachfolgende Teil vor einem betreffenden Datenintervall aufgezeichnet wird und der vorhergehende Teil hinter dem betreffenden Datenintervall aufgezeichnet wird.

4. Anordnung nach Anspruch 1, 2 oder 3, bei der die Aufzeichnungsschaltungsmittel (3A, 3B, 7A, 7B) einen Drehkopf (3A, 3B) zum Aufzeichnen des komprimierten digitalen Signals und der redundanten digitalen Daten auf dem Medium (2) enthalten, wobei die Pufferintervalle zum Umschalten des Drehkopfes (3A, 3B) vorgesehen sind.

5. Anordnung nach einem der vorhergehenden Ansprüche, die in der Lage ist, ein digitales Signal aufzuzeichnen, das ein PCM-Audiosignal enthält.

6. Anordnung nach Anspruch 5, die in der Lage ist, das PCM-Audiosignal zusammen mit einem Videosignal aufzuzeichnen.

7. Anordnung nach Anspruch 6, die wirksam ist, um das PCM-Audiosignal in Endteilen von Aufzeichnungsspuren ($T_A$, $T_B$) auf dem Medium (2) aufzuzeichnen.

8. Anordnung zur Aufzeichnung eines digitalen Signals auf einem magnetischen Medium (2), mit einem Analog/Digital-Umsetzer (10) zum Umsetzen eines analogen Audiosignals in ein digitalisiertes Audiosignal,

einem Codierer (11), der wirksam ist, um eine Synchronisationsadresse und redundante Daten, die Fehlererfassungs- und Fehlerkorrektur-Codes enthalten, mit dem digitalisierten Audiosignal zu codieren, um ein aufzuzeichnendes digitales Audiosignal zu erzeugen,

einer Datenverarbeitungsschaltung (12), die wirksam ist, um die Zeitbasis des aufzuzeichnenden digitalen Audiosignals zu komprimieren, so daß das komprimierte digitale Audiosignal aus Audiodatenintervallen besteht, die die Daten in dem digitalen Audiosignal enthalten und die zeitlich voneinander getrennt sind,

Aufzeichnungsschaltungsmitteln (3A, 3B, 7A, 7B), die wirksam sind, um die komprimierten digitalen Audiosignale in Spuren ($T_A$, $T_B$) des magnetischen Mediums (2) aufzuzeichnen, wobei die Aufzeichnungsschaltungsmittel eine Vielzahl von Magnetköpfen (3A, 3B), Schaltmittel (7A, 7B), die zwischen die Vielzahl von Magnetköpfen (3A, 3B) und die Datenverarbeitungsschaltung (12) geschaltet sind, und ein HF-Schaltmittel (6) umfassen, das wirksam ist, um ein durch dieses empfangenes Videosignal in eine Vielzahl von Videosignalanteilen aufzuteilen und die Videosignalanteile den Schaltmitteln (7A, 7B) zuzuführen, so daß Ausgangssignale der Schaltmittel (7A, 7B), die den Magnetköpfen (3A, 3B) zugeführt werden, Videodatenintervalle enthalten, die mit den Videosignalanteilen korrespondieren, wobei die Audiodatenintervalle und die Pufferintervalle zwischen die Datenintervalle eingefügt werden,

wobei die Datenverarbeitungsschaltung (12) wirksam ist, um weitere redundante Daten zu erzeugen, die für eine Fehlererfassung oder Fehlerkorrektur des aufgezeichneten digitalen Audiosignals benutzt werden können, und die Aufzeichnungsschaltungsmittel (3A, 3B, 6, 7A, 7B) wirksam sind, um die weiteren redundanten Daten in den Spuren ($T_A$, $T_B$) auf dem magnetischen Medium (2) in den Pufferintervallen vor und hinter den Audiodatenintervallen aufzuzeichnen.

9. Anordnung nach Anspruch 8, bei der die Vielzahl von Magnetköpfen (3A, 3B) aus einem Paar von Köpfen besteht, die um 180° relativ zueinander versetzt montiert sind, die Schaltmittel aus einem Paar von Schaltern (7A, 7B) bestehen, die zwischen das Paar von Köpfen (3A, 3B) und die Datenverarbeitungsschaltung (12) geschaltet sind, und das HF-Schaltmittel (6) wirksam ist, um ein von diesem empfangenes Videosignal in zwei Videosignalanteile aufzuteilen und die zwei Videosignalanteil dem Paar von Schaltern (7A, 7B) zuzuführen.

## Revendications

1. Dispositif pour enregistrer un signal numérique sur un support (2), le dispositif comprenant: un circuit de traitement de données (12) actif pour comprimer la base de temps d'un signal numérique qui doit être enregistré de sorte que le signal numérique comprimé comprend des intervalles de données contenant les données dans le signal numérique qui sont espacés dans le temps d'intervalles de tampon; et

un circuit d'enregistrement (3A, 3B, 7A, 7B) actif pour enregistrer le signal numérique comprimé sur le support (2) par lequel le signal enregistré comprend les intervalles de données espacés des intervalles de tampon, caractérisé en ce que le circuit de traitement de données (12) est actif pour produire des données redondantes qui peuvent être utilisées pour une détection d'erreur ou une correction d'erreur du signal numérique enregistré et le circuit d'enregistrement (3A, 3B, 7A, 7B) est actif pour enregistrer les données redondantes sur le support (2) dans les intervalles de tampon avant et/ou après les intervalles de données.

2. Dispositif selon la revendication 1, dans lequel les données redondantes sont une partie extraite des données.

3. Dispositif selon la revendication 2, dans lequel les données numériques redondantes comprennent des segments successifs comprenant chacun une première partie ($m_1$ blocs) et une dernière partie ($m_2$ blocs), la disposition étant telle que chaque dernière partie est enregistrée avant un intervalle de données respectif et la première partie est enregistrée après l'intervalle de données respectif.

4. Dispositif selon l'une quelconque des revendications 1 à 3, dans lequel le circuit d'enregistrement (3A, 3B, 7A, 7B) comprend une tête rotative (3A, 3B) pour enregistrer le signal numérique comprimé et les données redondantes numériques sur le support (2), les intervalles de tampon servant à la transition de la tête rotative (3A, 3B).

5. Dispositif selon l'une quelconque des revendications 1 à 4, qui est capable d'enregistrer un signal numérique comprenant un signal sonore PCM.

6. Dispositif selon la revendication 5, qui est capable d'enregistrer le signal sonore PCM avec un signal vidéo.

7. Dispositif selon la revendication 6, qui est actif pour enregistrer le signal sonore PCM dans les parties de fin des pistes d'enregistrement ($T_A$, $T_B$) sur le support (2).

8. Dispositif pour enregistrer un signal numérique sur un support magnétique (2), le dispositif comprenant:

un convertisseur analogique-numérique (10) pour convertir un signal sonore analogique en un signal sonore sous forme numérique;

un codeur (11) actif pour coder des données de synchronisation, d'adresse et redondantes incluant des codes de détection d'erreur et de correction d'erreur avec le signal sonore mis sous forme numérique afin de produire un signal sonore numérique à enregistrer;

un circuit de traitement de données (12) actif pour comprimer la base de temps du signal sonore numérique à enregistrer de sorte que le signal sonore numérique comprimé comprend des intervalles de données sonores contenant les données dans le signal sonore numérique qui sont espacés dans le temps; et

un circuit d'enregistrement (3A, 3B, 7A, 7B) actif pour enregistrer le signal sonore numérique comprimé sur des pistes ($T_A$, $T_B$) du support magnétique (2), le circuit d'enregistrement comprenant un ensemble de têtes magnétiques (3A, 3B), un moyen commutateur (7A, 7B) connecté entre l'ensemble des têtes magnétiques (3A, 3B) et le circuit de traitement de données (12), et un moyen de commutation en RF (6) actif pour diviser un signal vidéo reçu par celui-ci en un ensemble de parties de signal vidéo et pour fournir les parties de signal vidéo au moyen commutateur (7A, 7B) de sorte que les signaux de sortie du moyen commutateur (7A, 7B) fournis aux têtes magnétiques (3A, 3B) comprennent des intervalles de données vidéo correspondant aux parties de signal vidéo, les intervalles de données sonores et les intervalles de tampon interposés entre les intervalles de données;

le circuit de traitement de données (12) étant actif pour produire d'autres données redondantes qui peuvent être utilisées pour une détection d'erreur ou une correction d'erreur du signal sonore numérique enregistré et le circuit d'enregistrement (3A, 3B, 7A, 7B) étant actif pour enregister les autres données redondantes sur les pistes ($T_A$, $T_B$) du supported magnétique (2) dans les intervalles de tampon avant et après les intervalles de données sonores.

9. Dispositif selon la revendication 8, dans lequel l'ensemble de têtes magnétiques (3A, 3B) comprend une paire de têtes montées espacées l'une de l'autres de 180°, le moyen commutateur comprend une paire de commutateurs (7A, 7B) connectés entre la paire de têtes (3A, 3B) et le circuit de traitement de données (12), et le moyen de commutation en RF (6) divise un signal vidéo reçu par lui en deux parties de signal vidéo et fournit ces deux parties de signal vidéo à la paire de commutateurs (7A, 7B).

# F I G. 1

# F I G. 2

# F I G.3

# F I G.4

| SYNC | ADR | P | Q | W₀ | W₁ | W₂ | W₃ | W₄ | W₅ | W₆ | CRC CODE |
|------|-----|---|---|----|----|----|----|----|----|----|----------|

1 BLOCK

# F I G.5

2

# F I G.6

| | | DATA | | | DATA | | |

$T_A$      $T_B$

$\tau$     $\tau$     $\tau$

# F I G.7

| $\begin{matrix} n-1 \\ -m_2 \end{matrix}$ | $\sim$ | n | 1 | 2 | $\sim$ | $m_1$ | $\sim$ | $\begin{matrix} n-1 \\ -m_2 \end{matrix}$ | $\sim$ | n | 1 | $\sim$ | $m_1$ |

$m_2$ BLOCKS      n BLOCKS      $m_1$ BLOCKS

3